Europäisches Patentamt

European Patent Office

Office européen des brevets

(19)

(11) Veröffentlichungsnummer: **0 328 514 B1**

(12) **EUROPÄISCHE PATENTSCHRIFT**

(45) Veröffentlichungstag der Patentschrift:
04.12.91 Patentblatt 91/49

(21) Anmeldenummer: 89890037.8

(22) Anmeldetag: 13.02.89

(51) Int. Cl.$^5$: **C10M 103/00**, C10M 169/04,
F16D 69/02, // (C10M103/00,
103:02, 103:06),
(C10M169/04, 103:02,
103:06, 125:06, 125:24),
C10N10:04, C10N10:10,
C10N30:04, C10N40:00,
C10N50:08

(54) Schmiermittel.

(30) Priorität: 12.02.88 AT 319/88

(43) Veröffentlichungstag der Anmeldung:
16.08.89 Patentblatt 89/33

(45) Bekanntmachung des Hinweises auf die
Patenterteilung:
04.12.91 Patentblatt 91/49

(84) Benannte Vertragsstaaten:
BE CH DE ES FR GB IT LI NL SE

(56) Entgegenhaltungen:
EP-A- 0 185 147
DE-A- 1 644 924
DE-C- 3 513 031
US-A- 3 965 016

(73) Patentinhaber: CHEMSON
POLYMER-ADDITIVE GESELLSCHAFT M.B.H.
A-9601 Arnoldstein (AT)

(72) Erfinder: Buxbaum, Lothar
Emailwerkstrasse 14
A-9523 Landskron (AT)
Erfinder: Seyfried, Gunter
Aliogasse 14
A-1150 Wien (AT)

(74) Vertreter: Collin, Hans, Dipl.-Ing. Dr. et al
Patentanwälte Dipl.-Ing. Dr. Hans Collin
Dipl.-Ing. Erwin Buresch Dipl.-Ing.Armin Häupl
Mariahilferstrasse 50
A-1070 Wien (AT)

EP 0 328 514 B1

## Beschreibung

Die Erfindung betrifft ein Schmiermittel in Form einer Festschmierstoffkombination, insbesondere für Reibmaterialien wie z.B. Reibbeläge, auf Basis von Graphit, Zinksulfid und mindestens einem anorganischen Metallphosphat, sowie damit gebildete Reibmaterialien, insbesondere Reibbeläge.

Reibmaterialien, die in Form von Brems- bzw. Kupplungsbelägen zum Einsatz kommen, sind hohen Anforderungen unterworfen. Die prinzipielle Funktion solcher Reibelemente ist die Umwandlung kinetischer Energie in Wärme und dann die Aufnahme und Abführung dieser Wärme. Gleichzeitig soll die Relativbewegung zwischen Reibelement und dem sich bewegenden Körper durch Reibung vermindert werden. Um das zu erreichen, muß der Reibungskoeffizient über einem bestimmten Wert liegen und möglich unabhängig von den jeweiligen Betriebsbedingungen, insbesondere bei höheren Temperaturen, praktisch gleich bleiben. Die Energieumwandlung muß unter einem Minimum an Abrieb der einander berührenden Teile vor sich gehen. Das Reibmaterial muß daher abriebbeständig und möglichst hitzestabil sein und sollte neben einer möglichst gleichmäßigen Arbeitsweise zu keiner Lärmentwicklung führen.

Generell bestehen Reibbeläge aus einer Grundsubstanz, Bindemitteln und Füllstoffen.

Die Grundsubstanz bestand bisher hauptsächlich aus Asbest in verschiedenen Faserlängen oder aus Gewebe. In allen Neuentwicklungen der letzten Jahre wird jedoch kein Asbest mehr verwendet, sondern an dessen Stelle andere anorganische oder organische Fasern wie z.B. Kohlenstoff- oder Aramidfasern bzw. Metalle in Pulver-, Span- oder Faserform.

Als Bindemittel werden überwiegend Harze auf Phenol- und Kresolbasis eingesetzt, die je nach Anwendung thermoplast- oder kautschuk-modifiziert sein können.

Als Füllstoffe kommen eine ganze Reihe unterschiedlicher Produkte zum Einsatz, die einerseits der Verstärkung, Versteifung und Verbilligung dienen, andererseits als sogenannte aktive Füllstoffe den Reibungskoeffizienten und das Verschleißverhalten des Reibbelages bzw. des Gegenmaterials beeinflussen. Außerdem haben sie auch Einfluß auf das sogenannte Komfortverhalten des Belages, d.h. auf eine Verminderung bzw. Verhinderung von Rupfen, Rubbeln, Quietschen oder Dröhnen.

In diesem Zusammenhang wird auf "Friction Materials", Chemical Technology Review No. 100 Noyes Data Corp., USA ; 1978, als relevanter Stand der Tecknik und als relevante Offenbarung Bezug genommen.

Aktive Füllstoffe, die die Reibungseigenschaften beeinflussen, gelangen meist als sogenannte Festschmierstoffkombinationen zum Einsatz.

Derartige Festschmierstoffkombinationen, die auch in Bremsbelägen Verwendung finden und insbesondere solche, die Graphit und Zinksulfid enthalten, sind in der DE-A-2514575 und der DE-C-3513031 beschrieben. Aus der US-A-3965016 ist bekannt, daß komplexe Antimonsulfide, die sich prinzipiell von den einfachen Antimontrisulfid bzw. Antimonpentasulfid oder auch deren Zwischenformen unterscheiden, als Zusatz in Schmierfetten und Ölen — also auf einem ganz anderen Gebiet — das Verschleißverhalten positiv beeinflussen.

Es werden heute verschiedene Kombinationen anorganischer Stoffe als Reibbelagadditive verwendet, um die einen oder anderen Anforderungen, die heute an moderne Bremsbeläge gestellt werden, zu erfüllen. Bei den immer höher werdenden Anforderungen zeigt es sich jedoch, daß die Erfüllung aller Forderungen hinsichtlich gleichmäßigen Reibwerts bei unterschiedlichen Temperaturen, sowie langer Lebensdauer von Bremsbelag und Bremsscheiben bis jetzt nicht zu erfüllen war. Außerdem besteht immer das Problem der Reibmaterialübertragung auf die Bremsscheibe, was den Reibungskoeffizienten verändert.

Es bestand somit die Aufgabe, ausgehend vom bekannten Stand der Technik, mit dem — wie erwähnt — keine alle Anforderungen erfüllenden Lösungen angeboten werden können, die Nachteile dieser Lösungen zu vermeiden.

Überraschenderweise wurde nunmehr eine neue Festschmierstoffkombination gefunden, mit der sich die erwähnten Nachteile zumindest im wesentlichen vermeiden lassen.

Die neue, erfindungsgemäße Festschmierstoffkombination auf Basis von Graphit, Zinksulfid und mindestens einem anorganischen Metallphosphat ist vor allem dadurch gekennzeichnet, daß sie zusätzlich 1-4% Antimontrisulfid, 5-20% Antimonpentasulfid und 0,1-3% freien Schwefel, bezogen auf ihre Gesamtmasse, enthält.

Vorteilhaft enthält die erfindungsgemäße Schmierstoffkombination als Basis 20-60 Gew.-% Graphit, 15-50 Gew.-% Zinksulfid und 5-30 Gew.-% Metallphosphat, bezogen auf ihre Gesamtmasse.

Als Metallphosphatkomponente ist vorteilhaft mindestens ein Kalziumphosphat, Eisenphosphat, Magnesiumphosphat, Aluminiumphosphat, Zinkphosphat oder Zinkpyrophosphat oder Mischungen aus mindestens zwei Bestandteilen dieser Gruppe vorgesehen.

Dementsprechend ist das mit der erfindungsgemäßen Festschmierstoffkombination gebildete Reibmaterial, vorzugsweise Reibbelag, insbesondere Brems- oder Kupplungsbelag, vor allem dadurch gekennzeichnet,

2

daß es eine derartige Festschmierstoffkombination als Zusatz enthält.

Besonders günstige Verhaltensergebnisse werden erzielt, wenn das Reibmaterial die Festschmierstoffkombination in einer Menge von 1-15% seiner Gesamtmasse enthält.

Die erfindungsgemäße Festschmierstoffkombination erfüllt in hervorragender Weise die Anforderungen der Bremsbelagindustrie. Ihre Zusammensetzung gewährleistet bei tiefen und hohen Temperaturen eine entsprechende Schmierwirkung und trotzdem gleichbleibende Reibungskoeffizienten des Reibungsmaterials. Dabei treten durch die Reibungswärme chemische Umwandlungen auf, die zu temperaturbeständigen Verbindungen führen, so daß durch die Kombination aller Eigenschaften der Abrieb von Bremsbelag und Bremsscheibe bei hohen Temperaturen minimal bzw. optimal ist.

Die erfindungsgemäße Festschmierstoffkombination entfaltet ihre vorteilhafte Wirkung z.B. sowohl in asbesthaltigen als auch in asbestfreien Brems- und Kupplungsbelägen. Die erfindungsgemäße Festschmierstoffkombination ist bei der Reibbelagherstellung universell einsetzbar, wobei zur Erreichung von Höchstleistungen die Bestandteile und auch das Verfahren zur Herstellung der Reibbeläge auf die jeweilige Problemstellung abgestimmt werden.

Die einzelnen Bestandteile der erfindungsgemäßen Schmierstoffkombination sind handelsübliche Produkte, deren Korngröße im allgemeinen unter 63 µm liegt. Diese Einzelkomponenten können entweder natürlichen Ursprungs sein oder synthetisch hergestellt werden. Bei den Metallphosphaten werden im allgemeinen synthetisch hergestellte Produkte eingesetzt. Je nach Anwendung werden einmal mehr natürliche Produkte und ein anderes Mal mehr die synthetischen Produkte bevorzugt.

Die Struktur der als "Antimonpentasulfid" kommerziell erhältlichen und in der Literatur häufig so genannten Produkte ist bis heute noch nicht völlig aufgeklärt. Sie können durch eine auf Grund der Analyse der Elemente aufgestellte Bruttoformel, die zwischen $Sb_2S_3$ und $Sb_2S_5$ liegt, definiert werden. Je nach den Bedingungen des Herstellverfahrens (aus Antimonchlorid und Natriumsulfid r.a.) liegt die Formel des orange gefärbten Produktes näher bei $Sb_2S_5$ oder bei $Sb_2S_3$. Die Existenz eines reinen $Sb_2S_5$ wird von manchen Autoren bezweifelt (Th. Birchal, B. Della Valle, J. Chem. Soc. D 1970, (11), 675-6).

Der Vorteil der Versendung eines Gemisches von Antimontrisulfid, "Antimonpentasulfid" und freiem Schwefel anstelle von Antrimontrisulfid allein beruht auf dem bei steigender Temperatur stufenweise wirksam werdenden Schwefel. Während freier Schwefel schon bei geringen Temperaturerhöhungen wirksam wird, zersetzt sich "Antimonpentasulfid" bei etwa 200°C unter Freisetzung von Schwefel, während die Zersetzung von Antimontrisulfid bei etwa 350°C einsetzt.

Die Herstellung der erfindungsgemäßen Festschmierstoffkombination erfolgt üblich durch gutes und inniges Vermischen der Einzelkomponenten z.B. in einem Schnellmischer.

Die Einarbeitung der so hergestellten Compounds in die jeweilige Reibbelagausgangsmischung erfolgt nach den in der Reibbelagindustrie üblichen Methoden zusammen mit anderen Additiven.

Die Erfindung wird nachfolgend anhand von Beispielen näher erläutert, wobei mit erfindungsgemäßen Festschmierstoffkombinationen folgende Bremsbelagformulierungen zusammengemischt, bei 210°C zu Bremsbelägen verpreßt und in einem Krauss-Ganzbelag-Reibwertprüfstand untersucht wurden :

Bremsbelagformulierung (Gew.-%) :

30% Stahlwolle

15% Kupferspäne

10% Messingspäne

15% Schwerspat

10% Graphit

8% Kautschuk

5% Novolak

7% Festschmierstoffkombination

| Beispiele | Festschmierstoffkombination (Gew.-%) | | | | | | Prüfstandergebnisse | | | Lärm-entwicklung |
|---|---|---|---|---|---|---|---|---|---|---|
| | Graphit | Zink-sulfid | Tricalcium-phosphat | Antimon-trisulfid | Antimon-pentasulfid | Schwefel | Belagver-schleiß (mm) | Reibwert-(Δμ) schwankung | Scheiben-auftrag | |
| 1 | 30 | 40 | 8 | 4 | 16 | 2,0 | 1,8 | 0,8 | keiner | keine |
| 2 | 40 | 20 | 24 | 3 | 12 | 1,0 | 1,7 | 0,6 | keiner | keine |
| 3 | 50 | 30 | 10 | 4 | 5,8 | 0,2 | 1,6 | 0,4 | keiner | keine |
| 4 | 60 | 20 | 10 | 2 | 7,7 | 0,3 | 1,9 | 0,6 | keiner | keine |
| 5 (Vergleich) | ohne Festschmierstoffkombination, dafur mit insgesamt 22 % Schwerspat | | | | | | 6,0 | 2,0 | keiner | stark |
| 6 (Vergleich) | 50 | 30 | 10 | 10 | — | — | Beispiel 1 der DE-C- 3 513 031 / 2,0 | 0,9 | keine | mittel |

Die Ergebnisse der Beispiele 1-5 zeigen, daß der Zusatz der erfindungsgemäßen Festschmierstoffkombinationen gegenüber bekannten Produkten den Belagverschleiß vermindert, den Reibwert auch bei steigender Temperatur weitgehend konstant hält und dabei auch keinen die Bremswirkung vermindernden Scheibenauftrag bewirkt.

Auch die weiteren Untersuchungen der erfindungsgemäß hergestellten Beläge in einem Dynamometer und Tests in Personenkraftwagen zeigten, daß diese Beläge alle gewünschten Eigenschaften in optimaler Kombination besitzen und vor allem keine Lärmentwicklung im Auto verursachen.

Dies ist vor allem für asbestfreie Beläge überraschend, da diese hinsichtlich Lärmentwicklung viel empfindlicher als asbesthaltige Beläge sind.

## Patentansprüche

1. Festschmierstoffkombination, insbesondere für Reibmaterialien wir z.B. Reibbeläge, auf Basis von Graphit, Zinksulfid und mindestens einem anorganischen Metallphosphat, dadurch gekennzeichnet, daß sie zusätzlich 1-4% Antimontrisulfid, 5-20% Antimonpentasulfid und 0,1-3% freien Schwefel, bezogen auf ihre Gesamtmasse, enthält.

2. Festschmierstoffkombination nach Anspruch 1, dadurch gekennzeichnet, daß sie 20-60 Gew.-% Graphit, 15-50 Gew.-% Zinksulfid und 5-30 Gew.-% Metallphosphat, bezogen auf ihre Gesamtmasse, enthält.

3. Festschmierstoffkombination nach Anspruch 1 oder 2, dadurch gekennzeichnet, daß sie als Metallphosphat mindestens ein Kalziumphosphat, Eisenphosphat, Magnesiumphosphat, Aluminiumphosphat, Zinkphosphat oder Zinkpyrophosphat oder Mischungen aus mindestens zwei Bestandteilen dieser Gruppe enthält.

4. Reibmaterial, vorzugsweise Reibbelag, insbesondere Brems- oder Kupplungsbelag, dadurch gekennzeichnet, daß es eine Festschmierstoffkombination nach einem der Ansprüche 1 bis 3 als Zusatz enthält.

5. Reibmaterial nach Anspruch 4, dadurch gekennzeichnet, daß es die Festschmierstoffkombination in einer Menge von 1-15% seiner Gesamtmasse enthält.

## Claims

1. A solid lubricant combination, in particular for friction material such as friction linings, on the basis of graphite, zinc sulfide and at least one inorganic metal phosphate, characterized in that it additionally contains 1 to 4 percent of antimony trisulfide, 5 to 20 percent of antimony pentasulfide and 0.1 to 3 percent of sulfur in the free state based on its total weight.

2. The solid lubricant combination according to claim 1, characterized in that it contains 20 to 60 percent of graphite, 15 to 50 percent of zinc sulfide and 5 to 30 percent of metal phosphate based on its total weight.

3. The solid lubricant combination according to claim 1 or 2, characterized in that it contains at least one calcium phosphate, iron phosphate, magnesium phosphate, aluminium phosphate, zinc phosphate or zinc pyrophospate or a mixture of at least two components of this group as the metal phosphate.

4. A friction material, preferably friction lining, in particular brake or clutch lining, characterized in that it contains a solid lubricant combination according to any one of the claims 1 to 3 as an additive.

4

5. The friction material according to claim 4, characterized in that it contains the solid lubricant combination in an amount of 1 to 15 percent based on its total weight.

## Revendications

1. Combinaison de lubrifiant solide, en particulier pour matériaux de friction comme, par exemple, des garnitures de friction sur base de graphite, de sulfure de zinc et au moins un phosphate métallique inorganique, caractérisée en ce qu'elle contient en addition 1 à 4% de trisulfure d'antimoine, de 5 à 20% de pentasulfure d'antimoine et de 0,1 à 3% de soufre libre par rapport à son poids total.

2. Combinaison de lubrifiant solide selon la revendication 1, caractérisée en ce qu'elle contient de 20 à 60 pourcent en poids de graphite, de 15 à 50 pourcent en poids de sulfure de zinc et de 5 à 30 pourcent en poids de phosphate métallique par rapport à son poids total.

3. Combinaison de lubrifiant solide selon la revendication 1 ou 2, caractérisée en ce qu'elle contient comme phosphate métallique au moins un phosphate de calcium, phosphate de fer, phosphate de magnésium, phosphate d'aluminium, phosphate de zinc ou pyrophosphate de zinc ou des mélanges d'au moins deux composants dudit groupe.

4. Matériau de friction, en particulier garniture de frein ou garniture d'embrayage, caractérisé en ce qu'il contient une combinaison de lubrifiant solide selon une des revendications 1 à 3 comme additif.

5. Matériau de friction selon la revendication 4, caractérisé en ce qu'il contient une quantité de 1 à 15% de la combinaison de lubrifiant solide par rapport à son poids total.